# EUROPÄISCHE PATENTSCHRIFT

(11) **EP 3 381 734 B1**
(45) Veröffentlichungstag und Bekanntmachung des Hinweises auf die Patenterteilung: **18.12.2019**
(21) Anmeldenummer: 18151050.4
(22) Anmeldetag: 10.01.2018
(51) Int. Cl.: B60L 5/00

(54) **TRENNVORRICHTUNG FÜR DEN STROMABNEHMER EINES SCHIENENFARHZEUGS**
SEPARATING DEVICE FOR PANOGRAPH OF A RAIL VEHICLE
DISPOSITIF DE SÉPARATION POUR PANTOGRAPH DU VEHICULE FERRROVAIRE

(30) Priorität: 19.01.2017 DE 102017101015
(43) Veröffentlichungstag der Anmeldung: 03.10.2018
(73) Patentinhaber: Stemmann-Technik GmbH, 48465 Schüttorf (DE)
(72) Erfinder: Kokkeler, Mischa, 48465 Schüttorf (DE)
(74) Vertreter: Griepenstroh, Jörg

(56) Entgegenhaltungen:
- EP-A1- 3 000 645
- EP-A1- 3 147 924
- DE-U1-202013 100 009
- US-A1- 2009 179 718

## Beschreibung

Die Erfindung betrifft eine Trennvorrichtung mit den Merkmalen im Oberbegriff des Patentanspruchs 1.

Trennvorrichtungen der hier in Rede stehenden Art sind zur dachseitigen Anordnung zwischen einer Stromabnehmeranordnung eines Fahrzeuges und den elektrischen Einrichtungen des Fahrzeuges vorgesehen. Bei dem Fahrzeug handelt es sich insbesondere um ein Schienenfahrzeug, das mit elektrischer Energie aus einer Oberleitung versorgt wird. Es kann sich bei dem Fahrzeug auch um ein schienenungebundenes Fahrzeug handeln, wie beispielsweise ein Oberleitungsbus.

Stromabnehmer, wie zum Beispiel Pantografen, sind bei einigen Fahrzeugen über Trennvorrichtungen elektrisch vom Fahrzeug trennbar. Die Trennvorrichtung dient also dazu, die Stromabnehmeranordnung von der Hochspannung der Oberleitung zu trennen bzw. die elektrische Verbindung wieder herzustellen.

Es ist bekannt (EP 2 296 931 B1), Trennmesser zu verwenden, welche durch eine schwenkende Bewegung mit einem Kontakt eines Pols in Berührung gebracht werden und von dem Kontakt dieses Pols durch eine Schwenkbewegung wieder wegbewegt werden, um die elektrische Verbindung zu trennen. Das Öffnen und Schließen erfolgt mechanisch. Es wird jedoch als nachteilig angesehen, wenn ausladende Schwenk- oder Drehbewegungen ausgeführt werden müssen. Für die Schwenkbewegung wird relativ viel Platz auf dem Dach des Fahrzeuges in unmittelbarer Nähe der Stromabnehmeranordnung benötigt. Der Bauraum in diesem Bereich ist sehr begrenzt. Aus Sicherheitsgründen soll die Trennvorrichtung auch nicht in den Innenraum des Fahrzeuges verlegt werden.

Zum Stand der Technik ist die EP 3 147 924 A1 zu nennen. Es wird eine Trennvorrichtung zur dachseitigen Anordnung zwischen einer Stromabnehmeranordnung eines Fahrzeuges und den elektrischen Einrichtungen des Fahrzeuges beschrieben. Eine linear bewegbare Kolbenstange eines Stellzylinders zum Trennen einer elektrischen Verbindung zwischen der Stromabnehmeranordnung und den elektrischen Einrichtungen des Fahrzeugs ist vorhanden. Es handelt sich um einen Vakuumunterbrecher, bei welchem besondere Vorkehrungen hinsichtlich der Abdichtung erforderlich sind. Die Übertragung des Stroms auf eine linear bewegbare Kolbenstange erfolgt über einen Federkontakt in einer Führungsbohrung für die Kolbenstange.

Die US 2009/179718 A1 offenbart eine Schaltvorrichtung, die an einem elektrisch angetriebenen Fahrzeug angeordnet ist und geeignet ist, durch gradlinige Verschiebung eines Kontaktmittels über ein Antriebsmittel, unterschiedslos in den zwei Richtungen, zwischen einem ersten Zustand, in dem das Kontaktmittel eine elektrische Verbindung zwischen einem ersten individuellen Anschluss und einem gemeinsamen Anschluss herstellt, und einem zweiten Zustand, in dem das Kontaktmittel eine elektrische Verbindung zwischen einem zweiten individuellen Anschluss und dem gemeinsamen Anschluss herstellt, zu schalten. Die individuellen Anschlüsse, der gemeinsame Anschluss und das Kontaktmittel sind in einem einzigen Isolator angeordnet. Bei einer solchen Schaltvorrichtung ist das Antriebsmittel selbst in dem Isolator angeordnet. Dadurch wird eine kompakte Bauweise erreicht.

Der Erfindung liegt die Aufgabe zugrunde, eine Trennvorrichtung zur dachseitigen Anordnung zwischen einer Stromabnehmeranordnung eines Fahrzeuges und den elektrischen Einrichtungen des Fahrzeuges dahingehend weiterzubilden, dass sie besonders einfach und platzsparend ist und zugleich ein möglichst geringes Gewicht besitzt.

Diese Aufgabe ist bei einer Trennvorrichtung mit den Merkmalen des Patentanspruchs 1 gelöst.

Vorteilhafte Weiterbildungen der Erfindung sind Gegenstand der Unteransprüche.

Die erfindungsgemäße Trennvorrichtung besitzt einen Stellzylinder mit einer linear bewegbaren Kolbenstange. Die Kolbenstange ist mit einem biegsamen Stromband gekoppelt. Die Kolbenstange ist zudem mit einem Trennmesser verbunden zum Trennen einer elektrischen Verbindung zwischen der Stromabnehmeranordnung und den elektrischen Einrichtungen des Fahrzeuges.

Die erfindungsgemäße Trennvorrichtung sieht eine lineare Bewegung eines Stellzylinders vor. Die lineare Bewegung des Stellzylinders erfordert wesentlich weniger Bauraum als eine Schwenkbewegung. Stellzylinder sind flachbauend und können liegend auf einem Dach eines Fahrzeuges angeordnet werden. Durch ein biegsames Stromband wird die elektrische Verbindung zwischen der Stromabnehmeranordnung und den elektrischen Einrichtungen hergestellt werden. Das biegsame Stromband wird von der Kolbenstange mitgeschleppt und von der Offenstellung in die Kontaktstellung verlagert. Die erfindungsgemäße Trennvorrichtung ist einfach im Aufbau, platzsparend und zudem sehr leicht. Sie erfüllt damit alle Anforderungen an eine robuste und Bauraum sparende Bauweise.

Der Stellzylinder wird vorzugsweise als pneumatischer Stellzylinder ausgeführt. Schienenfahrzeuge, aber auch Oberleitungsbusse, besitzen in der Regel Druckspeicher zur Bereitstellung pneumatischer Energie. Der Stellzylinder kann daher mit in der Regel vorhandenen Hilfsenergien betrieben werden, ohne dass es eines separaten Antriebes bedarf.

Bei der Erfindung ist ein erstes Ende des Strombandes an einer Konsole am Stellzylinder befestigt, ein zweites Ende des Strombandes mit einem Trennmesserhalter verbunden. Der Trennmesserhalter trägt das Trennmesser. Der Trennmesserhalter hat somit zwei Funktionen. Er dient einerseits zur Befestigung des Strombandes und andererseits zur Halterung des Trennmessers. Der Trennmesserhalter ist zudem das Verbindungsglied zur Kolbenstange und wird demzufolge translatorisch mit der Kolbenstange verlagert. Damit der Strom nicht von der Kolbenstange über den Stellzylinder fließt, wird das Stromband mit einer Konsole am Stellzylinder verbunden. Diese Konsole ist wiederum elektrisch leitend mit nachfolgenden elektrischen Anordnungen verbunden. Dies kann entweder eine elektrische Einrichtung des Fahrzeuges oder aber die Stromabnehmeranordnung sein. Die Konsole ist vorzugsweise aus einem Blechzuschnitt gefertigt, damit sie leicht ist und wenig Platz erfordert. Das gilt auch für das Stromband. Es ist vorzugsweise als Flachband ausgeführt. Ein solches Stromband ist vorzugsweise parallel zum Hubzylinder angeordnet und folgt damit der linearen Bewegung der Kolbenstange. Das Stromband wird hierbei verformt. Das Stromband besitzt vorzugsweise einen U-förmigen Umlenkbereich. Es wird daher nicht nur leicht gekrümmt, sondern um 180° umgelenkt. Der Umlenkbereich soll zudem möglichst klein gehalten werden. Vorzugsweise ist der Durchmesser des U-förmigen Umlenkbereiches kleiner als ein Außendurchmesser des Stellzylinders. Der U-förmige Umlenkbereich befindet sich in jeder Position der Kolbenstange vorzugsweise unmittelbar neben dem Stellzylinder. Der Umlenkbereich ist daher zur Kolbenstange hin offen und zu einem Zylinderboden des Stellzylinders geschlossen. Die U-förmige Umlenkung ermöglicht es, das Stromband ebenfalls möglichst flach bauend auszugestalten. Der Hubzylinder besitzt bereits eine sehr geringe Bauhöhe. Die Bauhöhe des gebogenen Strombandes an sich ist noch niedriger, wobei die maximale Bauhöhe durch den U-förmigen Umlenkbereich bestimmt wird. In Längsrichtung des Hubzylinders verläuft das Stromband vorzugsweise parallel zur Kolbenstange, das heißt, das zu verlagernde Ende ist möglichst nahe an der Kolbenstange angeordnet. Dementsprechend ist der Trennmesserhalter auch nur so groß wie nötig, um Bauvolumen und Gewicht zu sparen.

Der U-förmige Umlenkbereich ändert seine relative Position in Bezug auf den Stellzylinder in Abhängigkeit von der Stellung der Kolbenstange. Es ist jedoch vorgesehen, dass der U-förmige Umlenkbereich in keiner Position der Kolbenstange einen größeren Abstand von einem Dach des Fahrzeuges hat als eine Oberseite des Stellzylinders. Das heißt, dass der U-förmige Umlenkbereich, auch wenn er einen kleineren Außendurchmesser als der Stellzylinder hat, nicht so angeordnet ist, dass er nach oben über den Stellzylinder ragt. Das kann einerseits dadurch ermöglicht werden, dass der U-förmige Umlenkbereich hinreichend klein ist. Andererseits ist es möglich, die Konsole, an der das erste Ende des Strombandes befestigt ist, an der Oberseite des Stellzylinders anzuordnen. Der U-förmige Umlenkbereich weist dann nach unten, weil auch die Kolbenstange unterhalb der Höhe der Konsole verläuft. Grundsätzlich ist man beim Bau von Kraftfahrzeugen jedoch bestrebt, den Schwerpunkt so niedrig wie möglich zu halten. Auch aus aerodynamischer Sicht sind aufragende Aufbauten unerwünscht. Es wird daher als besonders vorteilhaft angesehen, wenn die Konsole zur Befestigung des Strombandes an einer dem Fahrzeug zugewandten Unterseite des Stellzylinders angeordnet ist. Das bedeutet, dass der U-förmige Umlenkbereich oberhalb der Konsole angeordnet ist und vorzugsweise einen kleineren Durchmesser besitzt, so dass er dennoch nicht über die Oberseite des Stellzylinders vorsteht.

Das Gegenstück zu dem Trennmesser wird als Messerkontakt bezeichnet. Der Messerkontakt ist für den Wirkeingriff mit dem verlagerbaren Trennmesser ausgebildet. Während das Trennmesser als vorstehendes Teil ausgebildet ist, ist der Messerkontakt als aufnehmendes Teil ausgebildet. Der Messerkontakt ist insbesondere im Querschnitt U-förmig konfiguriert und besitzt federnde Kontaktbauteile zur Anlage an dem Trennmesser. Der Messerkontakt ist zur fahrzeugseitigen Montage an einem Kontakthalter angeordnet. Der Kontakthalter sollte niedrig bauend ausgestaltet sein. Vorzugsweise hat eine Oberseite des Kontakthalters einen Abstand von einem Dach des Fahrzeuges, der kleiner oder gleich dem Abstand der Oberseite des Stellzylinders von dem Dach des Fahrzeuges ist. Mit anderen Worten steht auch der Kontakthalter am Fahrzeug nach oben nicht über den Stellzylinder vor.

In vorteilhafter Weiterbildung der Erfindung ist an der Konsole, die dem Stellzylinder zugeordnet ist, eine Befestigung für eine Stromübertragungsstange zum Stromabnehmer angeordnet. Bei dem Stromabnehmer handelt es sich insbesondere um einen Pantografen. Die Stromübertragung erfolgt über eine Stromübertragungsstange, die fahrzeugseitig angelenkt wird. Diese Anlenkung erfolgt über die gelenkige Befestigung an der besagten Konsole. Es wird mithin ein weiteres Bauteil eingespart, da der Pantograf selber keine separate Befestigung für die Stromübertragungsstange benötigt. Die Trennvorrichtung kann mithin mit dem Pantografen bzw. der Stromabnehmeranordnung konstruktiv kombiniert sein. Beide Bauteile können eine Einheit bilden. Insofern betrifft die Erfindung nicht nur eine Trennvorrichtung, sondern auch eine Stromabnehmeranordnung, insbesondere eine Pantografen, mit einer solchen Trennvorrichtung.

In vorteilhafter Weiterbildung sind an der Konsole zudem Halter für Versorgungsanschlüsse angeordnet. Es kann sich dabei um Versorgungsanschlüsse für Mittel zur pneumatischen Endlagenabfrage handeln. Die Konsole erfüllt damit mehrere Funktionen: Einerseits kann über die Konsole der Stellzylinder fahrzeugseitig fixiert werden. Andererseits wird über die Konsole Strom von einem Ende des Strombandes zu einer elektrischen Verbindung übertragen, welche den Stromfluss zum Stromabnehmer herstellt. Die elektrische Verbindung ist bevorzugt eine Stromübertragungsstange. Gleichzeitig kann die Konsole Halterungen für verschiedenartige Versorgungs- oder Prüfanschlüsse bereitstellen.

Die Erfindung wird nachfolgend anhand eines in den schematischen Zeichnungen dargestellten Ausführungsbeispiels näher erläutert. Es zeigt:
- Figur 1: eine erfindungsgemäße Trennvorrichtung in der Draufsicht;
- Figur 2: die Trennvorrichtung der Figur 1 in einer Seitenansicht und
- Figur 3: die Trennvorrichtung der Figur 1 in einer Draufsicht im geschlossenen Zustand.

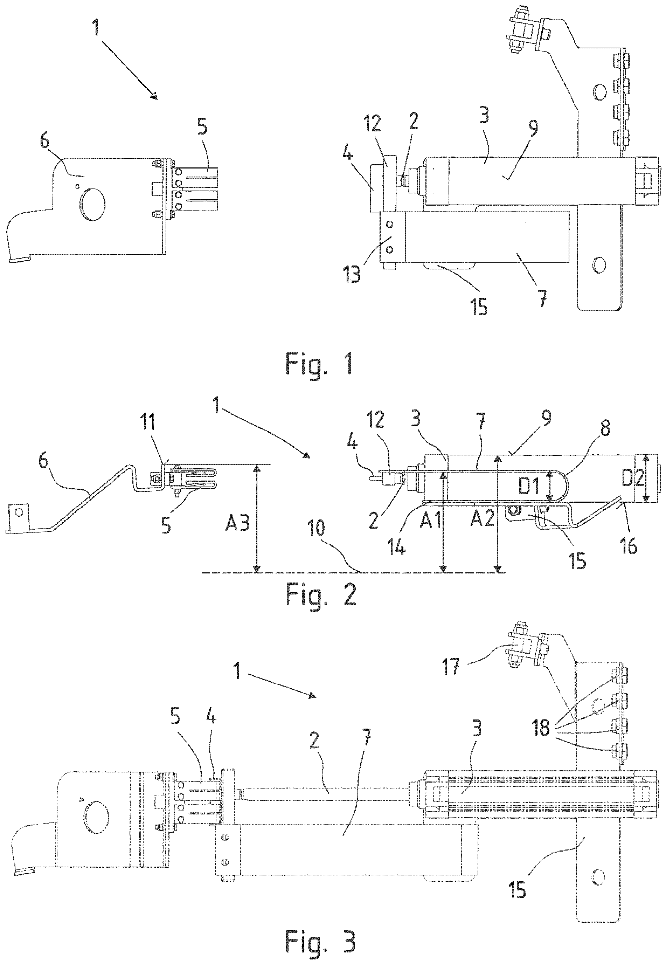

Figur 1 zeigt eine Trennvorrichtung 1 zur dachseitigen Anordnung zwischen einer Stromabnehmeranordnung eines Fahrzeuges und den elektrischen Einrichtungen des Fahrzeuges. Die Trennvorrichtung 1 besitzt eine lineare bewegbare Kolbenstange 2 eines Stellzylinders 3. Die Kolbenstange 2 ist in Figur 1 eingefahren. An ihrem Ende ist Trennmesser 4 angeordnet. Das Trennmesser 4 greift bei ausgefahrener Kolbenstange 2 in einen Messerkontakt 5. Der Messerkontakt 5 ist an einem Kontakthalter 6 angeordnet, der fahrzeugseitig montiert wird, d. h. elektrischen Einrichtungen des Fahrzeuges zugeordnet, also verbraucherseitig angeordnet ist. Bei dem Kontakthalter 6 handelt es sich um einen mehrfach abgewinkelten Blechzuschnitt, wie aus der Seitenansicht der Figur 2 zu erkennen ist. Der Strom wird bei geschlossenem Stromkreis von einer nicht näher dargestellten Stromabnehmeranordnung an ein Stromband 7 geleitet, das an einer Konsole 15 befestigt ist. Das Stromband 7 ist als Flachband ausgeführt und verläuft parallel zum Stellzylinder 3 und somit parallel zur Kolbenstange 2. Aus der Seitenansicht gemäß Figur 2 ist zu erkennen, dass das Stromband 7 einen U-förmigen Umlenkbereich 8 unmittelbar neben dem Stellzylinder 3 besitzt. Dieser Umlenkbereich 8 besitzt einen Durchmesser D1, der kleiner ist als der Außendurchmesser D2 des Stellzylinders 3. Dadurch steht das Stromband 7 nicht nach oben über eine Oberseite 9 des Stellzylinders 3 vor. Zudem befindet sich der U-förmige Umlenkbereich 8 in keiner Position der Kolbenstange 2 in einem größeren Abstand A1 von einem in Figur 2 als gestrichelte Linie angedeutetem Dach 10 eines nicht näher dargestellten Fahrzeugs als die Oberseite 9 des Stellzylinders 3 (Abstand A2). Eine Oberseite 11 des Kontakthalters 6 für den Messerkontakt 5 befindet sich in einem Abstand A3 von dem Dach 10 des Fahrzeuges, der kleiner oder gleich dem Abstand A2 von der Oberseite 9 des Stellzylinders 3 gegenüber dem Dach 10 des Fahrzeuges ist (Figur 3). Die gesamte Anordnung ist daher sehr flachbauend und benötigt wenig Bauraum nach oben oberhalb des Daches 10 des Fahrzeuges.

Der Kontakthalter 6 ist selbst ebenfalls flachbauend. Er muss nur soweit gegenüber dem Dach 10 nach oben vorragen, dass das Trennmesser 4 sicher in die federnde Aufnahme des Messerkontaktes 5 greifen kann. Das Trennmesser 4 selbst ist an einem Trennmesserhalter 12 befestigt, an welchem auch ein zweites Ende 13 des Strombandes 7 befestigt ist. Ein erstes Ende 14 des Strombandes 7 ist an der Konsole 15 befestigt. Die Konsole 15 befindet sich an einer dem Fahrzeug bzw. dem Dach 10 zugewandten Unterseite 16 des Stellzylinders 3. Die beiden Enden 13, 14 des Strombandes 7 sind so befestigt, dass sie parallel zueinander angeordnet sind, wobei das Stromband 7 von dem Trennmesser 4 weg weist. Das erste Ende 14 des Strombandes 7 ist in der Nähe des Endes 13 des Stellzylinders 3 angeordnet, an dem die Kolbenstange 2 austritt. Figur 3 zeigt die ausgefahrene Kolbenstange 2 des Stellzylinders 3 und mithin den Wirkeingriff zwischen dem Trennmesser 4 und dem Messerkontakt 5. Der Strom wird über das Stromband 7 in die Konsole eingeleitet und über die Konsole in nicht näher dargestellter Weise einer Stromübertragungsstange einer Stromabnehmeranordnung. Hierzu ist eine Befestigung 17 an der Konsole 15 angeordnet. Die Konsole 15 ist aus einem mehrfach abgekanteten Blechzuschnitt hergestellt. Sie erstreckt sich beiderseits, also in Horizontalrichtung, über den Querschnitt des Stellzylinders 3 hinaus. Sie besitzt zudem mehrere Halter 18 für Versorgungsanschlüsse oder Steueranschlüsse. Insbesondere handelt es sich um Luftanschlüsse für den Stellzylinder 3 sowie zur Positionsabfrage. In nicht näher dargestellter Weise besitzt der Stellzylinder 3 Mittel zur pneumatischen Endlagenabfrage.

### Bezugszeichen:

- 1 -: Trennvorrichtung
- 2 -: Kolbenstange
- 3 -: Stellzylinder
- 4 -: Trennmesser
- 5 -: Messerkontakt
- 6 -: Kontakthalter
- 7 -: Stromband
- 8 -: Umlenkbereich
- 9 -: Oberseite von 3
- 10 -: Dach
- 11 -: Oberseite von 6
- 12 -: Trennmesserhalter
- 13 -: zweites Ende von 7
- 14 -: erstes Ende von 7
- 15 -: Konsole
- 16 -: Unterseite von 3
- 17 -: Befestigung
- 18 -: Halter

- A1 -: Abstand Dach - Stromband
- A2 -: Abstand Dach - Oberseite von 3
- A3 -: Abstand Dach - Oberseite von 6
- D1 -: Durchmesser von 8
- D2 -: Durchmesser von 3

## Patentansprüche

1. Trennvorrichtung zur dachseitigen Anordnung zwischen einer Stromabnehmeranordnung eines Fahrzeuges und den elektrischen Einrichtungen des Fahrzeuges, wobei eine linear bewegbare Kolbenstange (2) eines Stellzylinders (3) mit einem biegsamen Stromband (7) gekoppelt ist, wobei die Kolbenstange (2) mit einem Trennmesser (4) verbunden ist, zum Trennen einer elektrischen Verbindung zwischen der Stromabnehmeranordnung und den elektrischen Einrichtungen des Fahrzeuges, **dadurch gekennzeichnet, dass** ein erstes Ende (14) des Strombandes (7) an einer Konsole (15) am Stellzylinder (3) befestigt ist und ein zweites Ende (13) des Strombandes (7) mit einem Trennmesserhalter (12) verbunden ist, wobei die Konsole (15) zur Befestigung des Strombandes (7) an einer Oberseite (9) des Stellzylinders (3) oder an einer dem Fahrzeug zugewandten Unterseite (16) des Stellzylinders (3) angeordnet ist.

2. Trennvorrichtung nach Anspruch 1, **dadurch gekennzeichnet, dass** die Kolbenstange (2) Bestandteil eines pneumatischen Stellzylinders (3) ist.

3. Trennvorrichtung nach Anspruch 1 oder 2, **dadurch gekennzeichnet, dass** das Stromband (7) als Flachband ausgeführt ist.

4. Trennvorrichtung nach einem der Ansprüche 1 bis 3, **dadurch gekennzeichnet, dass** das Stromband (7) parallel zum Stellzylinder (3) angeordnet ist und einen U-förmigen Umlenkbereich (8) besitzt, dessen Durchmesser (D1) kleiner als ein Außendurchmesser (D2) des Stellzylinders (3) ist.

5. Trennvorrichtung nach einem der Ansprüche 1 bis 4, **dadurch gekennzeichnet, dass** ein U-förmiger Umlenkbereich (8) in keiner Position der Kolbenstange (2) einen größeren Abstand (A2) von einem Dach (10) des Fahrzeuges hat als eine Oberseite (9) des Stellzylinders (3).

6. Trennvorrichtung nach einem der Ansprüche 1 bis 5, **dadurch gekennzeichnet, dass** ein Messerkontakt (5) für den Wirkeingriff mit dem verlagerbaren Trennmesser (4) zur fahrzeugseitigen Montage an einem Kontakthalter (6) angeordnet ist.

7. Trennvorrichtung nach Anspruch 6, **dadurch gekennzeichnet, dass** eine Oberseite (11) des Kontakthalters (6) einen Abstand (A3) von einem Dach (10) des Fahrzeuges hat, der kleiner oder gleich dem Abstand (A2) der Oberseite (9) des Stellzylinders (3) von dem Dach (10) des Fahrzeuges ist.

8. Trennvorrichtung nach einem der Ansprüche 1 bis 7, **dadurch gekennzeichnet, dass** an der Konsole (15) eine Befestigung (17) für eine elektrische Verbindung zum Stromabnehmer angeordnet ist.

9. Trennvorrichtung nach einem der Ansprüche 1 bis 8, **dadurch gekennzeichnet, dass** an der Konsole (15) Halter (18) für Versorgungsanschlüsse angeordnet sind.

10. Trennvorrichtung nach einem der Ansprüche 1 bis 9, **dadurch gekennzeichnet, dass** der Stellzylinder (3) mit Mitteln zur pneumatischen Endlagenabfrage ausgestattet ist.

## Claims

1. Separating device for the roof-side arrangement between a pantograph assembly of a vehicle and the electrical equipment of the vehicle, wherein a linearly movable piston rod (2) of an actuating cylinder (3) is coupled with a bendable conductor line (7), wherein the piston rod (2) is connected with a separating blade (4), for separating an electrical connection between the pantograph assembly and the electrical equipment of the vehicle, **characterised in that** a first end (14) of the conductor line (7) is fastened to a bracket (15) on the actuating cylinder (3) and a second end (13) of the conductor line (7) is connected with a separating blade holder (12), wherein the bracket (15) for fastening the conductor line (7) is disposed on a top side (9) of the actuating cylinder (3) or on a bottom side (16), facing the vehicle, of the actuating cylinder (3).

2. Separating device according to claim 1, **characterised in that** the piston rod (2) is a component of a pneumatic actuating cylinder (3).

3. Separating device according to claim 1 or 2, **characterised in that** the conductor line (7) is in the form of a flat band.

4. Separating device according to any of claims 1 to 3, **characterised in that** the conductor line (7) is disposed parallel to the actuating cylinder (3) and has a U-shaped deflection region (8), of which the diameter (D1) is smaller than an outer diameter (D2) of the actuating cylinder (3).

5. Separating device according to any of claims 1 to 4, **characterised in that** a U-shaped deflection region (8) has in no position of the piston rod (2) a greater distance (A2) from a roof (10) of the vehicle than does a top side (9) of the actuating cylinder (3).

6. Separating device according to any of claims 1 to 5, **characterised in that** a blade contact (5) for the operative engagement with the displaceable separating blade (4) is disposed for the vehicle-side assembly on a contact holder (6).

7. Separating device according to claim 6, **characterised in that** a top side (11) of the contact holder (6) has a distance (A3) from a roof (10) of the vehicle which is smaller than or equal to the distance (A2) of the top side (9) of the actuating cylinder (3) from the roof (10) of the vehicle.

8. Separating device according to any of claims 1 to 7, **characterised in that** on the bracket (15) is disposed a fastening means (17) for an electrical connection to the pantograph.

9. Separating device according to any of claims 1 to 8, **characterised in that** on the bracket (15) are disposed holders (18) for supply connections.

10. Separating device according to any of claims 1 to 9, **characterised in that** the actuating cylinder (3) is equipped with means for the pneumatic terminal position interrogation.

## Revendications

1. Dispositif de séparation pour l'ensemble côté toit entre un ensemble pantographe d'un véhicule et les dispositifs électriques du véhicule, dans lequel une tige de piston linéairement mobile (2) d'un vérin (3) est couplée avec une bande de courant souple (7), dans lequel la tige de piston (2) est reliée à un couteau de séparation (4), pour la séparation d'une liaison électrique entre l'ensemble pantographe et les dispositifs électriques du véhicule, **caractérisé en ce qu'**une première extrémité (14) de la bande de courant (7) est fixée sur une console (15) au niveau du vérin (3) et une deuxième extrémité (13) de la bande de courant (7) est reliée à un support de couteau de séparation (12), dans lequel la console (15) est agencée pour la fixation de la bande de courant (7) au niveau d'un côté supérieur (9) du vérin (3) ou au niveau d'un côté inférieur (16) du vérin (3) tourné vers le véhicule.

2. Dispositif de séparation selon la revendication 1, **caractérisé en ce que** la tige de piston (2) fait partie d'un vérin pneumatique (3).

3. Dispositif de séparation selon la revendication 1 ou 2, **caractérisé en ce que** la bande de courant (7) est réalisée en tant que bande plate.

4. Dispositif de séparation selon l'une quelconque des revendications 1 à 3, **caractérisé en ce que** la bande de courant (7) est agencée parallèlement au vérin (3) et dispose d'une zone de renvoi en forme de U (8), dont le diamètre (D1) est inférieur à un diamètre extérieur (D2) du vérin (3).

5. Dispositif de séparation selon l'une quelconque des revendications 1 à 4, **caractérisé en ce qu'**une zone de renvoi en forme de U (8) n'a dans aucune position de la tige de piston (2) une plus grande distance (A2) par rapport à un toit (10) du véhicule qu'un côté supérieur (9) du vérin (3).

6. Dispositif de séparation selon l'une quelconque des revendications 1 à 5, **caractérisé en ce qu'**un contact de couteau (5) pour la prise active avec le couteau de séparation déplaçable (4) est agencé pour le montage côté véhicule au niveau d'un support de contact (6).

7. Dispositif de séparation selon la revendication 6, **caractérisé en ce qu'**un côté supérieur (11) du support de contact (6) a une distance (A3) par rapport à un toit (10) du véhicule, qui est inférieure ou égale à la distance (A2) du côté supérieur (9) du vérin (3) par rapport au toit (10) du véhicule.

8. Dispositif de séparation selon l'une quelconque des revendications 1 à 7, **caractérisé en ce qu'**une fixation (17) pour une liaison électrique avec le pantographe est agencée au niveau de la console (15).

9. Dispositif de séparation selon l'une quelconque des revendications 1 à 8, **caractérisé en ce que** des supports (18) pour raccords d'alimentation sont agencés au niveau de la console (15).

10. Dispositif de séparation selon l'une quelconque des revendications 1 à 9, **caractérisé en ce que** le vérin (3) est équipé de moyens pour la demande de fin de course pneumatique.
